## Europäisches Patentamt

## European Patent Office

## Office européen des brevets

(19)

(11) Numéro de publication: **0018270 A1**

(12) **DEMANDE DE BREVET EUROPEEN**

(21) Numéro de dépôt: 80400470.3

(22) Date de dépôt: **09.04.80**

(51) Int. Cl.³: **B 27 F 5/10,** B 23 Q 11/00

(30) Priorité: **11.04.79 FR 7909135**

(43) Date de publication de la demande: **29.10.80 Bulletin 80/22**

(84) Etats contractants désignés: **AT BE CH DE GB IT LI LU NL SE**

(71) Demandeur: **Parveau, Albert, Vignols, F-19130 Objat (FR)**
Demandeur: **Parveau, Lucien, Vignols, F-19130 Objat (FR)**

(72) Inventeur: **Parveau, Albert, Vignols, F-19130 Objat (FR)**
Inventeur: **Parveau, Lucien, Vignols, F-19130 Objat (FR)**

(74) Mandataire: **Blétry, Robert et al, OFFICE BLETRY 2, Boulevard de Strasbourg, F-75010 Paris (FR)**

(54) Mortaiseuse à trois outils coupants.

(57) Cette mortaiseuse à trois outils (6, 7, 8) coupants comporte une table de travail (2) fixe sur laquelle on peut fixer la pièce de bois (4) à mortaiser, et une tête mobile (5), susceptible de se déplacer horizontalement, perpendiculairement à la table de travail (2), ladite tête mobile (5) étant elle-même munie d'un couteau central (6) oscillant pour creuser la mortaise, et de deux couteaux latéraux (7, 8) à mouvement rectiligne alternatif, pour couper et aplanir les parois latérales de la mortaise.

La boîte à mécanisme (18) est agencée de façon que son centre de gravité soit à un niveau très voisin de celui du plan horizontal Y'-Y dans lequel travaillent les couteaux 6 à 8.

On évite ainsi que les outils (6, 7, 8) aient tendance à brouter, et que la pénétration dans le bois (4) s'avère difficile.

Les mortaiseuses à trois outils coupants comportent généralement une table de travail fixe sur laquelle on peut fixer la pièce de bois à mortaiser, et une tête mobile, susceptible de se déplacer horizontalement, perpendiculairement à la table de travail ; ladite tête mobile est elle-même munie d'un couteau central oscillant pour creuser la mortaise, et de deux couteaux latéraux, appelés bédanes, à mouvement rectiligne alternatif, pour couper et aplanir les parois latérales de la mortaise.

La tête mobile peut coulisser sur deux glissières de guidage, horizontales, situées l'une au-dessus de l'autre, dans le plan vertical de symétrie de la mortaiseuse.

Il arrive, lors de l'exécution de mortaises, que les outils aient tendance à brouter et que la pénétration dans le bois s'avère difficile ; cherchant à pallier ce grave inconvénient, les Demandeurs ont trouvé qu'il était possible de l'éviter en agençant la boîte à mécanismes de la tête mobile de façon à en élever le centre de gravité, pour qu'il se trouve plus près du plan de travail des outils et pour que son poids n'ait pas tendance à faire basculer vers le haut les outils.

Ce résultat peut être obtenu notamment en allégeant la partie basse de la boîte à mécanismes et en alourdissant sa partie haute, en disposant un contrepoids sur elle.

Le dessin annexé montre à titre d'exemple un mode de réalisation de la présente invention :

La figure 1 est une vue de côté d'une telle mortaiseuse.

La figure 2 est une vue en coupe verticale faite suivant la ligne II-II de la figure 1.

La mortaiseuse représentée comporte un socle 1 à la partie supérieure duquel se trouve une table de travail 2, sur laquelle peut être fixée, par un dispositif de serrage quelconque 3, la pièce de bois 4 à mortaiser.

La tête mobile 5, munie d'un couteau central 6 et de deux couteaux latéraux 7 et 8, dont le mouvement est commandé par le moteur 16, la transmission 17 et la boîte à mécanismes 18 peut coulisser, perpendiculairement à la table de travail 2 et à la pièce de bois à mortaiser 4, sur deux glissières de guidage 9 et 10, disposées à des niveaux différents dans un même plan vertical de symétrie de la mortaiseuse.

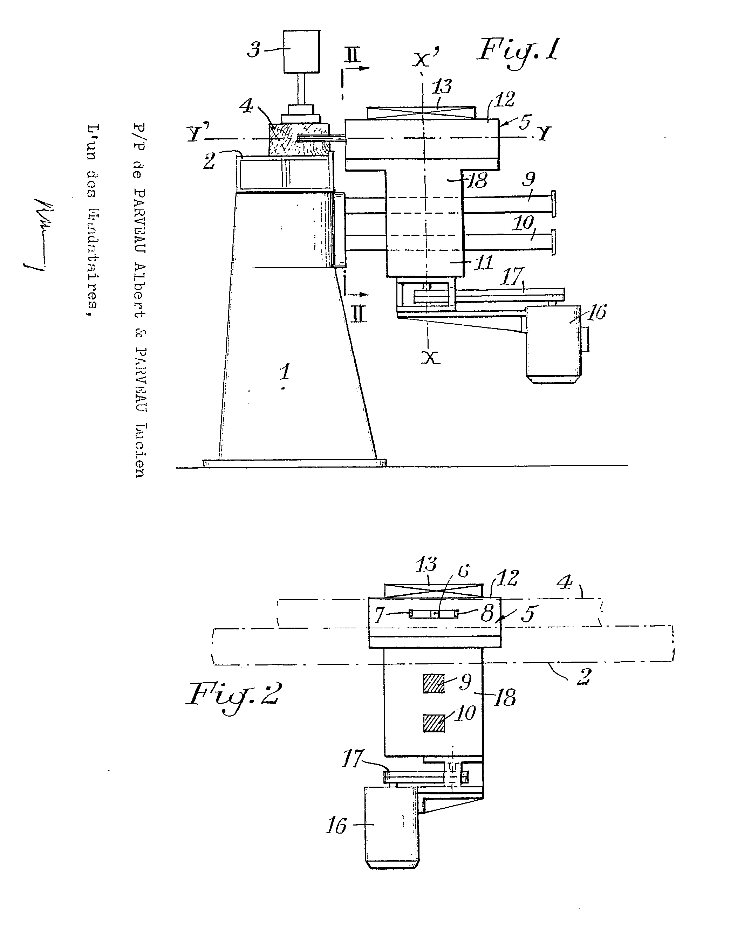

Comme on peut le voir sur les figures 1 et 2, la boîte à mécanismes 18 est agencée de façon à être aussi symétrique que possible par rapport à l'axe X'-X.

La partie basse 11 de cette boîte à mécanismes 18 a été allégée dans toute la mesure du possible, et, sur sa partie haute 12, a été fixé un contrepoids 13.

De la sortie, le centre de gravité de la tête mobile se trouve ainsi à un niveau très voisin de celui du plan horizontal Y'-Y dans lequel travaillent les couteaux 6 à 8.

Il est bien entendu que le mode de réalisation de l'invention qui a été décrit ci-dessus en référence au dessin annexé a été donné à titre purement indicatif et nullement limitatif et que de nombreuses modifications peuvent être apportées sans qu'on s'écarte pour cela du cadre de la présente invention.

DEUX PAGES.-        P/P de PARVEAU Albert & PARVEAU Lucien

L'un des Mandataires,

## REVENDICATIONS

1. Mortaiseuse à trois outils coupants comportant une table de travail fixe sur laquelle on peut fixer la pièce de bois à mortaiser, et une tête mobile susceptible de se déplacer horizontalement, perpendiculairement à la table de travail, ladite tête mobile étant elle-même munie d'un couteau central oscillant pour creuser la mortaise, et de deux couteaux latéraux à mouvement rectiligne alternatif, pour couper et aplanir les parois latérales de la mortaise, caractérisée en ce que le centre de gravité de la boîte à mécanismes 18 de la tête mobile 5 se trouve à un niveau très voisin de celui du plan horizontal Y'-Y dans lequel travaillent les couteaux 6 à 8.

2. Mortaiseuse suivant la revendication 1, caractérisée en ce que la partie basse 11 de cette boîte à mécanismes 18 a été allégée, et, sur sa partie haute 12, a été fixé un contrepoids 13.

3. Mortaiseuse suivant l'une quelconque des revendications 1 ou 2, caractérisée en ce que la boîte à mécanismes est agencée de façon qu'elle n'ait pas tendance à faire basculer vers le haut les outils.

UNE PAGE.-     P/P de PARVEAU Albert & PARVEAU Lucien

.L'un des Mandataires,

*Fig.1*

*Fig.2*

Office européen
des brevets

**RAPPORT DE RECHERCHE EUROPEENNE**

Numéro de la demande

EP 80 40 0470

| DOCUMENTS CONSIDERES COMME PERTINENTS | | | CLASSEMENT DE LA DEMANDE (Int. Cl.) |
|---|---|---|---|
| Catégorie | Citation du document avec indication. en cas de besoin, des parties pertinentes | Revendica-tion concernee | |
| A | FR - A - 929 703 (BOUCHER) | 1 | B 27 F 5/10 B 23 Q 11/00 |
| A | FR - A - 1 029 149 (BOUCHER) | | |
| A | FR - A - 1 065 070 (CHAMBON) | | |
| A | FR - A - 524 258 (BAYONNAISE) | | |
| A | DE - C - 82 943 (NORRMAN) | | |
| A | DE - C - 658 383 (DECKEL) | | |
| | ---- | | |

DOMAINES TECHNIQUES RECHERCHES (Int. Cl.)

B 27 F 5/00
B 23 Q 11/00

CATEGORIE DES DOCUMENTS CITES

X: particulièrement pertinent
A: arrière-plan technologique
O: divulgation non-écrite
P: document intercalaire
T: théorie ou principe à la base
de l'invention
E: demande faisant interférence
D: document cité dans
la demande
L: document cite pour d'autres
raisons
&: membre de la même famille,
document correspondant

Le present rapport de recherche a été etabli pour toutes les revendications

| Lieu de la recherche | Date d achevement de la recherche | Examinateur |
|---|---|---|
| La Haye | 21-07-1980 | DE GUSSEM |

OEB Form 1503.1   06.78